# EUROPEAN PATENT APPLICATION

(11) **EP 4 611 226 A1**
(43) Date of publication of application: **03.09.2025**
(21) Application number: 23881724.1
(22) Date of filing: 19.10.2023
(51) Int. Cl.: H02K 3/493, H02K 3/487

(54) **SLOT WEDGE AND MOTOR PROVIDED WITH SAME**

(30) Priority: 26.10.2022 CN 202211316730; 26.10.2022 CN 202211316978
(71) Applicant: Zhejiang Pangood Power Technology Co., Ltd., Jinhua, Zhejiang 321109 (CN)
(72) Inventor: YANG, Chen, Jinhua, Zhejiang 321109 (CN); LIU, Yang, Jinhua, Zhejiang 321109 (CN); HE, Junming, Jinhua, Zhejiang 321109 (CN); ZHANG, Xiaolin, Jinhua, Zhejiang 321109 (CN); LIANG, Yusheng, Jinhua, Zhejiang 321109 (CN); ZHU, Min, Jinhua, Zhejiang 321109 (CN)
(74) Representative: advotec.
(86) International application number: PCT/CN2023/125395
(87) International publication number: WO 2024/088146

(57) **Abstract**

The present application discloses a slot wedge and a motor. The slot wedge comprises an insulating main body and pole shoes; one or more pole shoes are arranged on one side or two opposite sides of the insulating main body; an outer side wall of each pole shoe is fixedly connected to a slot side wall of each open slot of an iron core or a positioning portion arranged at the opening of each open slot; and an inner side wall of each pole shoe is fixedly connected to the insulating main body to cut off magnetic communication between the inner side wall of each pole shoe and each open slot. Slots of the iron core of the present application are of an open slot structure, and the coil inserting space is large, such that coil inserting of a winding of the iron core is facilitated, and the process difficulty of iron core slotting is reduced; pole shoes of slot wedges are matched with the open slots of the iron core, such that the effect of semi-open slots can be achieved, and the electromagnetic performance of the iron core can be improved; the pole shoes on two sides are separated by the insulating main body, such that an eddy current caused by communication of the pole shoes on the two sides can be avoided, and the motor efficiency is prevented from being affected; the insulating main body is provided on the side of the pole shoes close to the bottoms of the open slots, so as to achieve an insulating effect; the pole shoes are fixed by the insulating main body, such that the overall rigidity of the slot wedges can be increased, and the insulating main body can limit the winding.

## Description

The present application claims the priorities to Chinese Patent Application No. 202211316978.X, titled "COMPOSITE SLOT WEDGE AND MOTOR PROVIDED WITH SAME", filed with the China National Intellectual Property Administration on October 26, 2022, and Chinese Patent Application No. 202211316730.3, titled "SLOT WEDGE AND MOTOR PROVIDED WITH SAME", filed with the China National Intellectual Property Administration on October 26, 2022, the entire disclosures of which are incorporated herein by reference.

### FIELD

The present application relates to the technical field of motors, and in particular to a slot wedge and a motor provided with the slot wedge.

### BACKGROUND

An iron core of a motor is an important component of a magnetic circuit of the motor. A core slot of the motor for accommodating a winding has three structures, namely an open slot, a semi-closed slot and a closed slot. The closed slot structure is very rare in cores. Although the open slot structure is convenient for the winding to be placed, the electromagnetic performance of the motor is poor. A lack of a pole shoe aggravates harmonics in an air gap of the motor, which increases the loss of the motor, and reduces the performance and efficiency of the motor. The semi-closed slot structure is provided with the pole shoe, and the core has good electromagnetic performance. However, it is difficult to place the winding in the semi-closed slot structure, and thus flat copper wires or preformed coils made of flat copper wires can hardly be used.

The semi-closed slot and the open slot are usually in cooperation with a slot wedge. Conventional slot wedges are divided into insulation slot wedges and magnetic slot wedges. The insulation slot wedges are generally used for fixing the winding in the semi-closed slot, and the magnetic slot wedges are generally used for fixing the winding in the open slot. The semi-closed slot has a narrow opening, making it difficult to place the winding. When the open slot cooperates with the magnetic slot wedge, the magnetic slot wedge may serve as the pole shoe, but an eddy current may be produced in the magnetic slot wedge, which increases the temperature of a stator. The eddy current generated in the magnetic slot wedge may be reduced to some extent by cutting the magnetic slot wedge to disconnect an opening of the open slot, which, however, deteriorates the limiting function of the magnetic slot wedge on the winding.

Therefore, a technical problem to be solved by those skilled in the art is how to ensure the electromagnetic performance while making the placement of the winding easier.

### SUMMARY

An object of the present application is to provide a slot wedge and a motor provided with the slot wedge to solve the problem described in Background.

To achieve the above object, in a first aspect of the present application, a slot wedge is provided, including:
an insulation main body; and
at least one pole shoe provided on one side or each of two opposite sides of the insulation main body. An outer side wall of the pole shoe is fixedly connected to a side slot wall of an open slot of a core on a near side of the open slot. An inner side wall of the pole shoe is fixedly connected to the insulation main body, so that magnetic communication between the inner side wall of the pole shoe and the open slot is blocked.

In an embodiment, the one side or each of the two opposite sides of the insulation main body is provided with a groove, and the pole shoe is mounted in the groove. A side wall of the pole shoe that is connected to the side slot wall of the open slot is the outer side wall of the pole shoe, and another side wall of the pole shoe that is connected to a side wall of the groove is the inner side wall of the pole shoe.

In an embodiment, the insulation main body includes an insulation main body portion and an insulation bottom portion that are connected to each other. The insulation main body portion is located between the pole shoe and another side slot wall of the open slot on a far side of the open slot, and the insulation bottom portion is located on a side of the pole shoe close to the bottom of the open slot.

In an embodiment, an inner wall of the insulation bottom portion forming a groove wall of the groove is a first groove wall, and the first groove wall is inclined away from the bottom of the open slot in a direction from the insulation bottom portion to the insulation main body portion.

In an embodiment, the insulation main body further includes an insulation top portion that is connected to the insulation main body portion, and the insulation top portion is located on another side of the pole shoe away from the bottom of the open slot.

In an embodiment, the insulation main body further includes an insulation end portion that blocks two ends of the pole shoe along a length direction of the pole shoe, so as to block magnetic communication between the two ends of the pole shoe and the open slot.

In an embodiment, a first protrusion extending outwards is provided on an outer side of the pole shoe, and the side slot wall of the open slot is provided with an engagement groove. The first protrusion is in engagement with the engagement groove, and a shape of a cross section of the first protrusion is the same as a shape of a cross section of the engagement groove.

In an embodiment, the insulation end portion is provided with a second protrusion in correspondence with the first protrusion, and a shape of a cross section of the second protrusion is the same as the shape of the cross section of the first protrusion.

In an embodiment, the pole shoe is provided on the one side of the insulation main body, and the other side of the insulation main body away from the pole shoe is fixedly connected to the another side slot wall of the open slot.

In an embodiment, the other side of the insulation main body away from the pole shoe is provided with a third protrusion, and the third protrusion is engaged and fixed to the another side slot wall of the open slot.

In an embodiment, the pole shoe is provided on each of the two opposite sides of the insulation main body, and the pole shoe on one of the two opposite sides of the insulation main body is isolated from the pole shoe on the other one of the two opposite sides of the insulation main body by the insulation main body.

To achieve the above object, in a second aspect of the present application, another slot wedge is provided, including:
an insulation main body; and
at least one pole shoe provided on one side or two opposite sides of the insulation main body.

A positioning portion is provided at an opening of an open slot of a core, and an outer side wall of the pole shoe is fixed to the positioning portion by magnetically conductive adhesive, where magnetic communication between an inner side wall of the pole shoe and the open slot is blocked by the insulation main body.

In an embodiment, an outer side wall of the insulation main body is provided with a groove for mounting of the pole shoe, and the inner side wall of the pole shoe is in contact with a wall of the groove. The insulation main body includes an insulation main body portion and an insulation bottom portion that are connected to each other. The insulation main body portion is located between the pole shoe and a side slot wall of the open slot away from the positioning portion, and the insulation bottom portion is located on a side of the pole shoe close to the bottom of the open slot.

In an embodiment, an end of the insulation bottom portion away from the insulation main body portion is in contact with side walls of the open slot to block magnetic communication between the inner side wall of the pole shoe and the open slot.

In an embodiment, the outer side wall of the pole shoe and an outer side wall of the insulation main body are on a same surface.

In an embodiment, an inner side wall of the insulation bottom portion forming the groove wall of the groove is a first groove wall, and the first groove wall is inclined away from the bottom of the open slot in a direction from the insulation bottom portion to the insulation main body portion.

In an embodiment, a surface of the pole shoe on another side of the pole shoe away from the bottom of the open slot and an end face of the core that is provided with the open slot are on a same surface.

In an embodiment, the insulation main body further includes an insulation top portion that is connected to the insulation main body portion, and the insulation top portion is located on the another side of the pole shoe away from the bottom of the open slot.

In an embodiment, an inner wall of the insulation top portion facing the groove is perpendicular to an inner wall of the insulation main body portion facing the groove.

In an embodiment, the insulation main body further includes an insulation end portion that blocks two ends of the pole shoe along a length direction of the pole shoe.

In an embodiment, the positioning portion is a V-shaped groove, and a shape of the outer side wall of the pole shoe matches a shape of a groove wall of the positioning portion.

In an embodiment, the pole shoe is provided on the one side of the insulation main body, and the other side of the insulation main body away from the pole shoe is fixedly connected to a side slot wall of the open slot.

In an embodiment, the pole shoe is provided on each of the two opposite sides of the insulation main body, and the pole shoe on one of the two opposite sides of the insulation main body is isolated from the pole shoe on the other one of the two opposite sides of the insulation main body by the insulation main body.

To achieve the above object, in a third aspect of the present application, a motor is provided, including a core, where multiple open slots are evenly distributed on the core, and are in one-to-one correspondence with multiple slot wedges, where each of the multiple slot wedges is the slot wedge described hereinabove.

In an embodiment, a front end and a rear end of the insulation main body extend out of a corresponding one of the multiple open slots.

In summary, the present application has the following technical effects and advantages.
1. According to the present application, the core slot has an open slot structure, which provides a large space for winding, so as to facilitate placement of the winding in the core. The pole shoe of the slot wedge cooperates with the open slot of the core, functioning as a semi-closed slot to enhance the electromagnetic performance of the core. Moreover, when the pole shoe is provided on each of the two sides of the insulation main body, the pole shoes on the respective sides can be isolated from each other by the insulation main body, which prevents the pole shoes on the respective sides from being connected to each other to produce an eddy current to affect the efficiency of the motor. The insulation bottom portion is provided on the side of the pole shoe close to the bottom of the open slot for insulation. The pole shoe is fixed by the insulation main body, so that the overall stiffness of the slot wedge can be reinforced, and the insulation main body can limit the winding.
2. According to the present application, the pole shoe can also be connected to the positioning portion by the magnetically conductive adhesive. The mounting is simple, and is at a fixed position. The pole shoes on the respective sides are isolated from each other by the insulation main body, thereby preventing the pole shoes on the respective sides from being connected to each other to produce the eddy current to affect the efficiency of the motor.
3. According to the present application, the inner wall of the insulation bottom portion forming the groove wall of the groove is the first groove wall. Forces applied on the pole shoe by the insulation bottom portion includes a support force away from the bottom of the open slot and an outward pressing force towards the slot wall of the open slot. Since the pole shoe is in engagement with the slot wall of the open slot, the outward pressing force applied on the pole shoe by the insulation bottom portion can increase the interaction force between the slot wall of the open slot and the pole shoe, so that the connection between the pole shoe and the open slot is more stable.
4. According to the present application, forces applied on the pole shoe by the inclined first groove wall of the insulation bottom portion includes a support force away from the bottom of the open slot and an outward pressing force towards a slot wall of the positioning portion. The outward pressing force applied on the pole shoe by the first groove wall can increase the interaction force between the slot wall of the positioning portion and the pole shoe, so that the connection between the pole shoe and the positioning portion by the adhesive is more stable.
5. According to the present application, the stiffness of the slot wedge is further enhanced by the insulation top portion on the side of the pole shoe away from the bottom of the open slot, so that the slot wedge can bear a larger force. The insulation top portion, the insulation main body portion and the insulation bottom portion cooperate with each other to enclose the pole shoe, which protects the pole shoe from being deformed by a magnetic force applied by a permanent magnet.
6. According to the present application, the side of the pole shoe away from the bottom of the open slot and the insulation main body are on the same surface. As such, there is no insulation main body on the surface of the pole shoe on the side of the pole shoe away from the bottom of the open slot, so as to prevent that there is the insulation main body, on a surface of the slot wedge, that protrudes from the end face of the core, which may affects the size of a mechanical air gap.
7. According to the present application, the insulation main body protects both the front and rear ends of the pole shoe, so that the pole shoe is prevented from being damaged during assembling of the slot wedge. The front and rear ends of the insulation main body extend out of the slot wedge, and in this way, the insulation main body can limit an end winding outside the core.
8. According to the present application, the inner wall surface of the insulation top portion in correspondence with the groove is perpendicular to the inner wall of the insulation main body portion in correspondence with the groove, making the shape and size of the pole shoe and the open slot in cooperation with each other the same as the shape and size of the conventional semi-closed slot, thereby facilitating subsequent electromagnetic calculations.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are merely some examples of the present application, and for those skilled in the art, other drawings may be obtained based on these drawings without any creative efforts.
FIG. 1 is a schematic view showing the structure of a slot wedge according to a first embodiment of a first aspect of the present application;
FIG. 2 is a top view of the slot wedge according to the first embodiment of the first aspect of the present application;
FIG. 3 is a sectional view taken along a line A-A in FIG. 2;
FIG. 4 is a first schematic view showing the assembly of a core and the slot wedge according to the first embodiment of the first aspect of the present application;
FIG. 5 is a second schematic view showing the assembly of the core and the slot wedge according to the first embodiment of the first aspect of the present application;
FIG. 6 is a schematic view showing the structure of an open slot according to the first embodiment of the first aspect of the present application;
FIG. 7 is a schematic view showing the assembly of the open slot and the slot wedge according to the first embodiment of the first aspect of the present application;
FIG. 8 is a sectional view taken along a line B-B in FIG. 7;
FIG. 9 is a schematic view showing the structure of the slot wedge according to a second embodiment of the first aspect of the present application;
FIG. 10 is a top view of the slot wedge according to the second embodiment of the first aspect of the present application;
FIG. 11 is a sectional view taken along a line C-C in FIG. 10;
FIG. 12 is a schematic view showing the structure of the slot wedge according to a third embodiment of the first aspect of the present application;
FIG. 13 is a top view of the slot wedge according to the third embodiment of the first aspect of the present application;
FIG. 14 is a sectional view taken along a line D-D in FIG. 13;
FIG. 15 is a schematic view showing the structure of a slot wedge according to a first embodiment of a second aspect of the present application;
FIG. 16 is a sectional view of the slot wedge according to the first embodiment of the second aspect of the present application;
FIG. 17 is a schematic view showing the assembly of a core and the slot wedge according to the first embodiment of the second aspect of the present application;
FIG. 18 is a schematic view showing the structure of an open slot according to the first embodiment of the second aspect of the present application;
FIG. 19 is a schematic view showing the assembly of the open slot and the slot wedge according to the first embodiment of the second aspect of the present application;
FIG. 20 is a schematic view showing the structure of the slot wedge according to a second embodiment of the second aspect of the present application;
FIG. 21 is a sectional view of the slot wedge according to the second embodiment of the second aspect of the present application;
FIG. 22 is a schematic view showing the assembly of the core and the slot wedge according to the second embodiment of the second aspect of the present application; and
FIG. 23 is a schematic view showing the assembly of the open slot and the slot wedge according to the second embodiment of the second aspect of the present application.

### Reference numerals:

| | | | |
|---|---|---|---|
| 1 | slot wedge, | 2 | core, |
| 11 | insulation main body, | 12 | pole shoe, |
| 110 | insulation main body portion, | 111 | insulation bottom portion, |
| 112 | insulation top portion, | 113 | connecting surface, |
| 114 | chamfer surface, | 115 | second protrusion, |
| 116 | third protrusion, | 121 | first protrusion, |
| 21 | open slot, | 211 | engagement groove, |
| 212 | positioning portion. | | |

### DETAILED DESCRIPTION OF THE EMBODIMENTS

Technical solutions in the embodiments of the present application will be described clearly and completely as follows in conjunction with the accompany drawings of the embodiments of the present application. It is obvious that the described embodiments are only some of the embodiments of the present application, rather than all of the embodiments. All other embodiments obtained by those skilled in the art based on the embodiments in the present application without any creative work belong to the scope of protection of the present application.

In the description of the present application, it should be noted that the orientations or positional relationships indicated by terms such as "center", "up", "down", "left", "right", "vertical", "horizontal", "inner", "outer", and the like are based on the orientations or positional relationships shown in the drawings, and are merely for the convenience of describing the present application and the simplification of the description, and do not indicate or imply that the device or element referred to must have a particular orientation, or be configured and operated in a particular orientation, which therefore should not be construed as a limitation to the present application. In addition, terms such as "first", "second", "third" and the like are merely for description, and should not be construed as indicating or implying relative importance.

In the description of the present application, it should be noted that, the terms "mounted to", "connected with", "connected to" or the like should be construed broadly, unless otherwise specified or defined. For example, the connection may be fixed or detachable, or may be integrated. It may be a mechanical connection or an electrical connection. It may be a direct connection, or an indirect connection through an intermediate medium, or may be communication of interiors of two components. The specific meanings of the above terms may be understood by those skilled in the art according to specific cases.

Moreover, the technical features in different examples of the present application described hereinafter may be combined with each other, as long as they do not contradict each other.

### First embodiment of first aspect

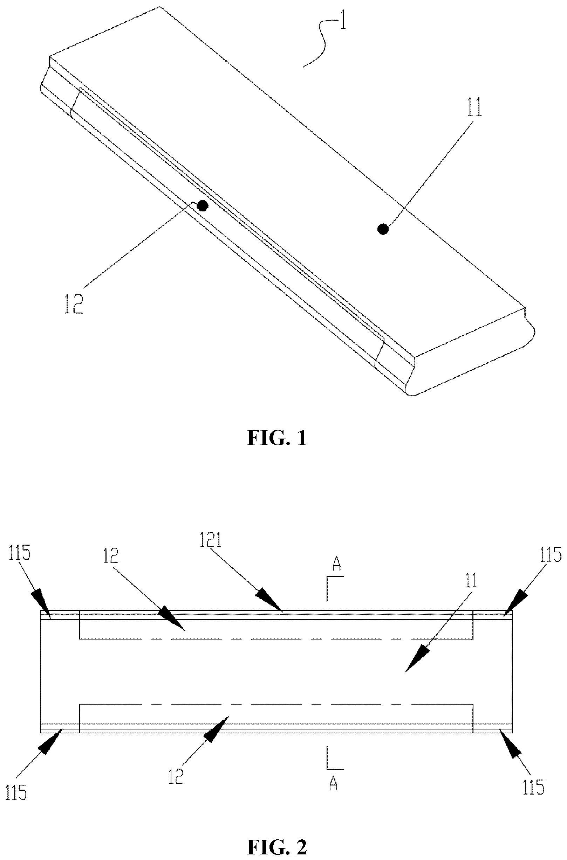

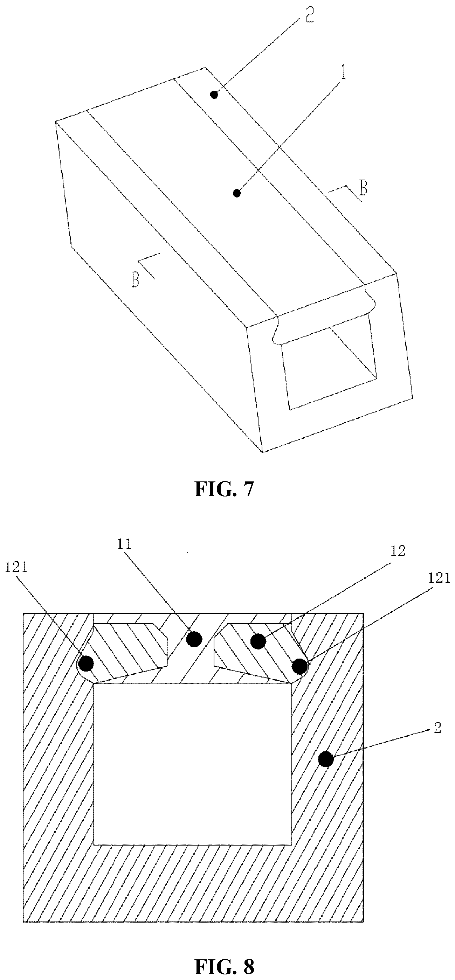

A slot wedge 1 is provided in the present embodiment as shown in FIGS. 1 to 8. The slot wedge 1 includes an insulation main body 11 and a pole shoe 12. The insulation main body 11 is the main body of the slot wedge 1, and is for fixing the pole shoe 12 and bearing an expansion force applied by a winding. The pole shoe 12 is configured to connect to a side slot wall of an open slot 21 to form a magnetic circuit. The structure formed by the pole shoe 12 and the open slot 21 in cooperation with each other is similar to a conventional semi-closed slot structure, and the pole shoe 12 is used for improving the electromagnetic performance of a core 2. Since the open slot 21 has a nontrivial length, the insulation main body 11 is of an elongated shape. Each of two opposite sides of the insulation main body 11 is provided with the pole shoe 12. An outer side wall of the pole shoe 12 is fixedly connected to a side slot wall of the open slot 21 on a near side of the open slot 21. An inner side wall of the pole shoe 12 is fixedly connected to the insulation main body 11, so that magnetic communication between the inner side wall of the pole shoe 12 and the open slot 21 is blocked. Specifically, each of the two opposite sides of the insulation main body 11 is provided with a groove for mounting of the pole shoe 12. A side wall of the pole shoe 12 connected to the side slot wall of the open slot 21 is the outer side wall of the pole shoe 12, and another side wall of the pole shoe 12 connected to a side wall of the groove is the inner side wall of the pole shoe 12. The open slot 21 includes a bottom slot wall, the side slot wall on the near side, and a side slot wall on a far side, and the side slot wall on the far side and the side slot wall on the near side are opposite to each other. The side slot wall on the far side and the side slot wall on the near side are defined based on positions of these two side slot walls relative to the pole shoe 12. The side slot wall of the open slot 21 on the near side is the side slot wall on which the outer side wall of the pole shoe 12 is directly fixed. When blocking the magnetic communication between the inner side wall of the pole shoe 12 and the open slot 21, the insulation main body 11 not only blocks the magnetic communication between the inner side wall of the pole shoe 12 and the side slot wall of the open slot 21 on the far side, but also blocks the magnetic communication between the inner side wall of the pole shoe 12 and the bottom slot wall of the open slot 21, and between the inner side wall of the pole shoe 12 and the side slot wall of the open slot 21 on the near side.

According to some examples of the present embodiment, a cross section of the insulation main body 11 is substantially I-shaped, and the insulation main body 11 includes an insulation main body portion 110, an insulation bottom portion 111 and an insulation top portion 112. The insulation main body portion 110 is located between the two grooves to isolate the two pole shoes, which are respectively located on the two opposite sides of the insulation main body 11, from each other. The insulation bottom portion 111 is located on a side of the pole shoe 12 close to the bottom of the open slot 21, and the insulation top portion 112 is located on another side of the pole shoe 12 away from the bottom of the open slot 21. According to other examples of the present embodiment, the insulation main body 11 does not include the insulation top portion 112, and the cross section of the insulation main body 11 is substantially of a "⊥" shape.

According to the present application, the core slot has an open slot 21 structure, which provides a large space for winding, so as to facilitate placement of the winding in the core, and makes it easier to manufacture the slot on the core. The pole shoe 12 of the slot wedge 1 cooperates with the open slot 21 of the core 2, functioning as a semi-closed slot to enhance the electromagnetic performance of the core 2. Moreover, the pole shoes 12 on the both sides can be isolated from each other by the insulation main body 11, which prevents the pole shoes 12 on the respective sides from being connected to each other to produce an eddy current to affect the efficiency of a motor. The insulation bottom portion 111 is provided on the side of the pole shoe 12 close to the bottom of the open slot 21 for insulation. The pole shoe 12 is fixed by the insulation main body 11, so that the overall stiffness of the slot wedge 1 can be reinforced, and the insulation main body 11 can limit the winding. The stiffness of the slot wedge 1 can be further enhanced by the insulation top portion 112, so that the slot wedge 1 can bear a larger force. The insulation top portion 112, the insulation main body portion 110 and the insulation bottom portion 111 cooperate with each other to enclose the pole shoe 12, which protects the pole shoe 12 from being deformed by a magnetic force applied by a permanent magnet.

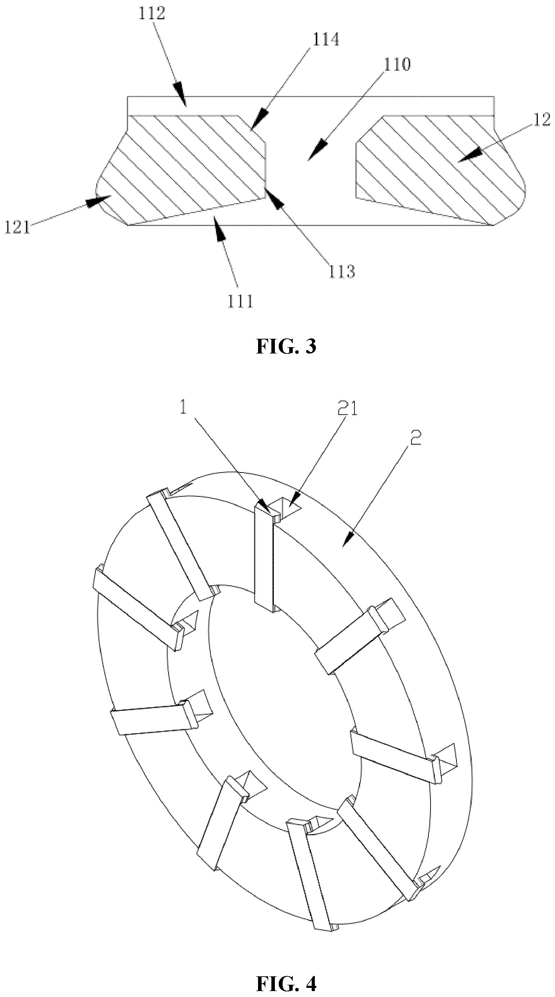

In an example, an inner wall of the insulation bottom portion 111 forming a groove wall of the groove is a first groove wall, and the first groove wall is inclined away from the bottom of the open slot 21 in a direction from the insulation bottom portion 111 to the insulation main body portion 110. In the present embodiment, forces applied on the pole shoe 12 by the inclined insulation bottom portion 111 includes a support force away from the bottom of the open slot 21 and an outward pressing force towards the slot wall of the open slot 21. Since the pole shoe 12 is in engagement with the slot wall of the open slot 21, the outward pressing force applied on the pole shoe 12 by the insulation bottom portion 111 can increase the interaction force between the slot wall of the open slot 21 and the pole shoe 12, so that the connection between the pole shoe 12 and the open slot 21 is more stable. In an example, the groove wall of the groove includes the first groove wall, a second groove wall and a connecting surface 113. The first groove wall is the inner wall of the insulation bottom portion 111, and the second groove wall is an inner wall of the insulation top portion 112. The connecting surface 113 is an inner wall of the insulation main body portion 110, and two ends of the connecting surface 113 are respectively connected to an inner side of the first groove wall and an inner side of the second groove wall. In the present embodiment, as shown in FIG. 3, the second groove wall is parallel to an end face of the core 2, and the connecting surface 113 is perpendicular to the second groove wall. A chamfer surface 114 is provided at a position where the connecting surface 113 is connected to the second groove wall, and the first groove wall is inclined. An inner side of the pole shoe 12 is in contact with the groove, so that the pole shoe 12 and the open slot 21 cooperatively form a same shape as the shape of the existing semi-closed slot, making subsequent electromagnetic calculations the same as conventional calculations, thereby facilitating design and selection by an engineer.

Specifically, the insulation main body 11 further includes an insulation end portion, which is provided on two ends of the pole shoe 12 along a length direction of the pole shoe 12. The insulation end portion protects both the front and rear ends of the pole shoe 12, so that the pole shoe 12 is prevented from being damaged when the slot wedge 1 is assembled in the open slot 21. In an example, each of front and rear ends of the insulation end portion extends out of the open slot 21, and in this way, the insulation end portion can limit an end winding outside the core 2.

Specifically, a first protrusion 121 extending outwards is provided on an outer side of the pole shoe 12, and the slot wall of the open slot 21 is provided with an engagement groove 211. The first protrusion 121 is in engagement with the engagement groove 211, and a shape of a cross section of the first protrusion 121 is the same as a shape of a cross section of the engagement groove 211. The specific shapes of the first protrusion 121 of the pole shoe 12 and the engagement groove 211 of the open slot 21 are not limited in the present application, as long as there are a protrusion and a recess cooperating with each other to limit the slot wedge 1.

In an example, the insulation end portion 112 is provided with a second protrusion 115 that is in correspondence to the first protrusion 121, and a shape of a cross section of the second protrusion 115 is the same as the shape of the cross section of the first protrusion 121. The second protrusion 115 can protect the first protrusion 121, and prevent the first protrusion 121 from being damaged when the slot wedge 1 is assembled in the open slot 21.

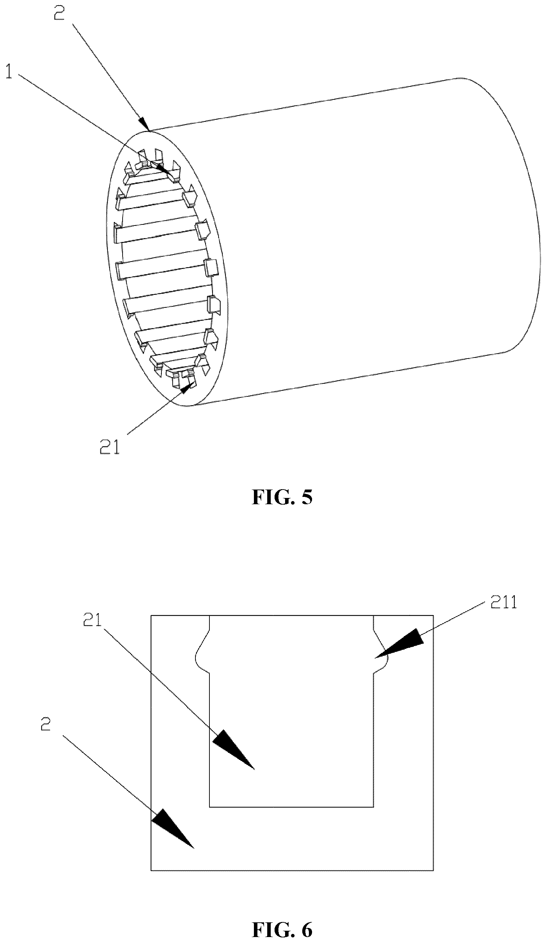

A motor is further provided in the present embodiment, as shown in FIG. 4, and the motor may be a disk motor. As shown in FIG. 5, the motor may be a radial flux motor alternatively. Although a lap winding can be placed in the radial flux motor by welding, a continuous wave winding still needs open slots for placement. That is, the slot wedge 1 according to the present embodiment is also applicable to the radial flux motor. Specifically, as shown in FIGS. 4 to 8, the motor includes the core 2. Multiple open slots 21 are evenly distributed on the core 2, and are in one-to-one correspondence with multiple slot wedges 1, where each of the multiple slot wedges 1 is the slot wedge 1 described hereinabove. In an example, the front and rear ends of the insulation main body 11 extend out of the open slot 21. The shape and size of the pole shoe 12 of the slot wedge 1 and the open slot 21 in cooperation with each other is the same as the shape and size of the conventional semi-closed slot, thereby facilitating the subsequent electromagnetic calculations.

The disk motor is taken as an example for detailed description. The core 2 is processed by rolling or stamping first, and the multiple open slots 21 are manufactured on the core 2. The engagement groove 211 is manufactured on each of the two sides of each of the multiple open slots 21, so as to facilitate the subsequent assembly of the slot wedge 1 and limit the slot wedge 1 by engagement. The slot wedge 1 occupies a space of the open slot 21. Hence, the engagement groove 211 is located at an upper portion of the open slot 21. In an example, the engagement groove 211 is 1 to 2 mm away from an upper end face of the core 2, so that the slot wedge 1 is completely engaged in the engagement groove 211 while not occupying too much space of the open slot 21.

The pole shoe 12 of the slot wedge 1 is prepared. In an example, the pole shoe 12 part is made of a soft magnetic material, which includes but is not limited to silicon steel sheets, SMC (soft magnetic composite material) or the like. The soft magnetic material is formed into the pole shoe 12 by riveting or self-bonding of the silicon steel sheets, or sintering of the soft magnetic material. The shape formed by the pole shoe 12 and the open slot 21 in cooperation with each other is the same as the shape of the conventional semi-closed slot, thereby facilitating the subsequent electromagnetic calculations, and making it easier for the engineer to design and calculate.

The pole shoe 12 part is formed and is placed into a mold for compression molding. A composite material of the insulation main body 11 is added to enclose the pole shoe 12. The composite material is a material that has relatively good stiffness and is insulative, which includes but is not limited to glass fiber or the like. Then the slot wedge 1 is manufactured by compression molding.

In the present embodiment, the pole shoe 12 part and the insulation main body 11 part are bonded into a whole, and the materials thereof are not blended, so as to prevent the soft magnetic materials of the pole shoes 12 and the core 2 from being connected to each other to produce the eddy current loss. Finally, the winding is placed in the open slot 21, and the slot wedge 1 is inserted into the open slot 21, so that the first protrusion 121 of the pole shoe 12 is in cooperation with the engagement groove 211 of the open slot 21 to finish assembly. Instead of a pole shoe 12 for the semi-closed slot, the pole shoe 12 is in contact with the core 2 to form a magnetic circuit. The insulation main body 11 is the main body of the slot wedge 1, and can bear the expansion force applied by the winding.

The self-piercing riveting technology, the core rolling technology and the compression molding technology for the composite material in the present technical solution are all mature technologies, and are easy to perform. With the present embodiment, it is possible to solve problems of difficulty in winding placement, increased harmonics of the air gap and increased eddy current in magnetic slot wedge with relatively low cost and technology requirements.

### Second embodiment of first aspect

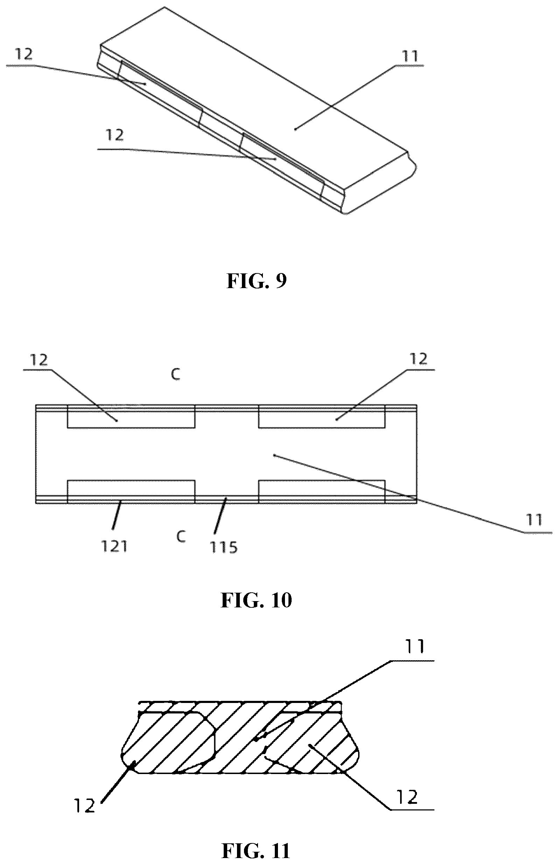

As shown in FIGS. 9 to 11, the present embodiment differs from the first embodiment of the first aspect in that, each of the two sides of the insulation main body 11 is provided with multiple pole shoes 12, and the number of the pole shoes 12 is at least two. In the present embodiment, the number of the pole shoes 12 on each side is two, and the two pole shoes 12 on the same side are isolated from each other by the insulation main body 11. The two pole shoes 12 on the same side are isolated from each other by the insulation main body 11, which is made of the composite material that has relatively good stiffness and is insulative. Compared with the silicon steel sheet and the SMC (soft magnetic composite material) for the pole shoes 12, the composite material can better resist deformation. Hence, the present embodiment can better resist deformation compared with the first embodiment. Other structures of the present embodiment are the same as those of the first embodiment of the first aspect.

### Third embodiment of first aspect

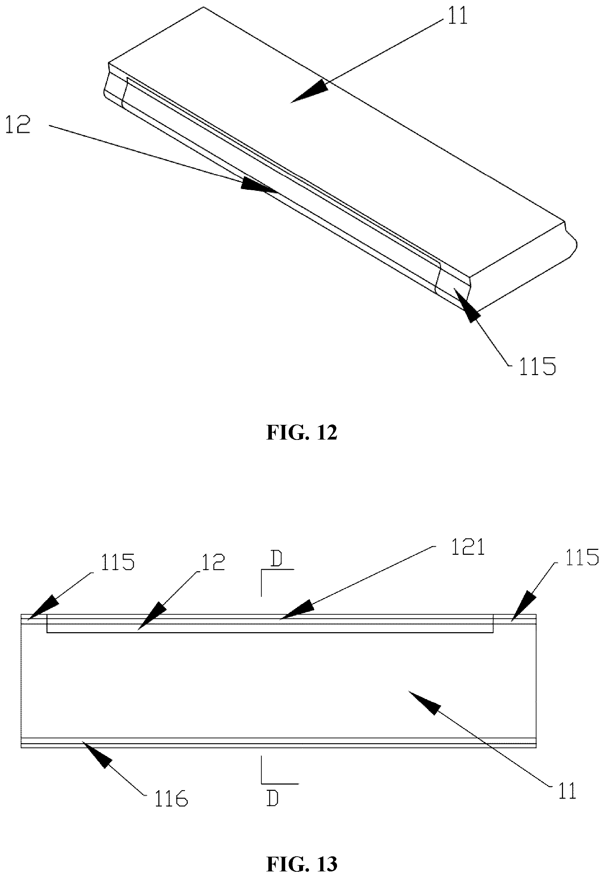

Some motors have stators with asymmetric pole shoes 12 on only one side. As shown in FIGS. 12 to 14, the present embodiment differs from the first embodiment of the first aspect in that, the pole shoe 12 is provided on one side of the insulation main body 11, and the number of the pole shoe 12 is not limited. In the present embodiment, the number of the pole shoe 12 is one. The other side of the insulation main body 11 is provided with a third protrusion 116 that is symmetric to the first protrusion 121. In assembly, the first protrusion 121 and the third protrusion 116 are respectively connected to the engagement grooves 211 of the open slot 21. Other structures of the present embodiment are the same as those of the first embodiment of the first aspect.

### First embodiment of second aspect

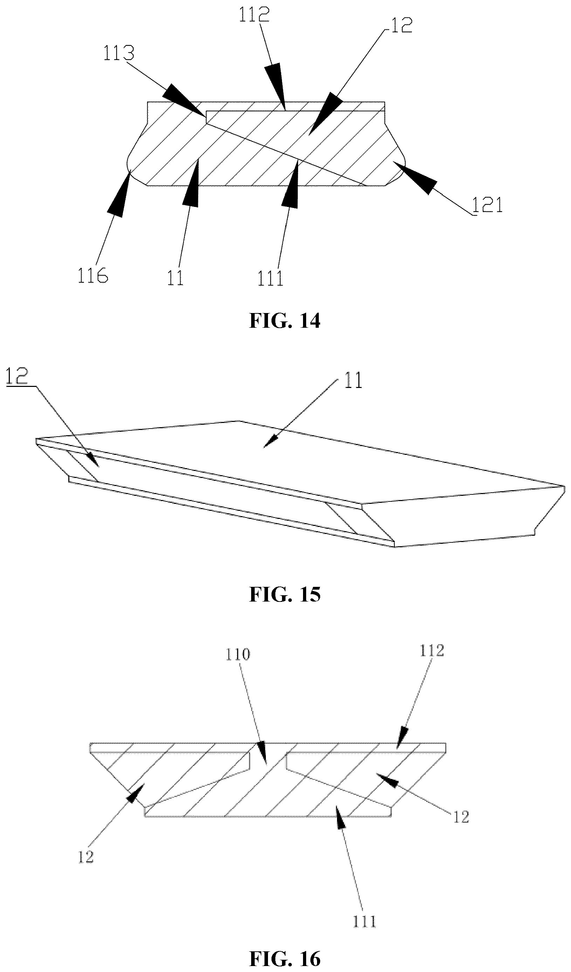

A slot wedge 1 is provided in the present embodiment as shown in FIGS. 15 to 19. The slot wedge 1 includes an insulation main body 11 and a pole shoe 12. The insulation main body 11 is the main body of the slot wedge 1, and is for fixing the pole shoe 12 and bearing an expansion force applied by a winding. The pole shoe 12 is configured to connect to a slot wall of an open slot 21 to form a magnetic circuit. The structure formed by the pole shoe 12 and the open slot 21 in cooperation with each other is similar to a conventional semi-closed slot structure, and the pole shoe 12 is used for improving the electromagnetic performance of a core 2. Since the open slot 21 has a nontrivial length, the insulation main body 11 is of an elongated shape. Each of two opposite sides of the insulation main body 11 is provided with the pole shoe 12. A positioning portion 212 is provided at an opening of the open slot 21, and an outer side wall of the pole shoe 12 is connected to the positioning portion 212 by magnetically conductive adhesive. The insulation main body 11 blocks magnetic communication between an inner side wall of the pole shoe 12 and the open slot 21. Specifically, an outer side wall of the insulation main body 11 is provided with a groove for mounting of the pole shoe 12, and the inner side wall of the pole shoe 12 is in contact with a groove wall of the groove. The insulation main body 11 includes an insulation main body portion 110 that is located between the pole shoe 12 and a side slot wall of the open slot 21 away from the positioning portion 212. The insulation main body 11 also includes an insulation bottom portion 111 that is connected to the insulation main body portion 110 and is located on a side of the pole shoe 12 close to the bottom of the open slot. The pole shoes 12 on the two sides are isolated from each other by the insulation main body portion 110. In the present embodiment, each of the two sides of the insulation main body 11 is provided with one pole shoe 12. The number of the pole shoe 12 on each side of the insulation main body 11 may be plural, such as two, three, four or the like, and the multiple pole shoes 12 on each side of the insulation main body 11 are spaced apart along a length direction of the insulation main body 11.

According to the present application, the slot of the core 2 is of an open slot structure, which provides a large space for winding, so as to facilitate placement of the winding in the core 2. The pole shoe 12 of the slot wedge 1 cooperates with the open slot 21 of the core 2, functioning as a semi-closed slot 21 to improve the electromagnetic performance of the core 2. The pole shoe 12 and the positioning portion 212 are bonded by the magnetically conductive adhesive. The mounting is simple, and is at a fixed position. The pole shoes 12 on the both sides can be isolated from each other by the insulation main body portion 110, which prevents the pole shoes 12 on the both sides from being connected to each other to produce an eddy current to affect the efficiency of a motor. The insulation bottom portion 111 is provided on the side of the pole shoe 12 close to the bottom of the open slot 21 for insulation. The pole shoes 12 are fixed by the insulation main body 11, so that the overall stiffness of the slot wedge 1 can be reinforced, and the insulation main body 11 can limit the winding.

In an example, each side wall of the insulation main body 11 is provided with the groove for mounting of the pole shoe 12, and the inner side wall of the pole shoe 12 is in contact with the groove wall of the groove. The outer side wall of the pole shoe 12 is on a same surface as the outer side wall of the insulation main body 11. An inner side wall of the insulation bottom portion 111 forming the groove wall of the groove is a first groove wall, and the first groove wall is inclined away from the bottom of the open slot in a direction from the insulation bottom portion 111 to the insulation main body portion 110. According to the present application, forces applied on the pole shoe 12 by the inclined first groove wall of the insulation bottom portion 111 includes a support force away from the bottom of the open slot 21 and an outward pressing force towards a wall of the positioning portion 212. The outward pressing force applied on the pole shoe 12 by the first groove wall can increase the interaction force between the wall of the positioning portion 212 and the pole shoe 12, so that the connection between the pole shoe 12 and the positioning portion 212 by the adhesive is more stable.

In an example, a surface of the pole shoe 12 on another side of the pole shoe 12 away from the bottom of the open slot 21 is on a same surface as an end face of the core 2 that is provided with the open slot 21.

In some examples of the present embodiment, the insulation main body 11 further includes an insulation top portion 112 that is connected to the insulation main body portion 110, and the insulation top portion 112 is located on the another side of the pole shoe 12 away from the bottom of the open slot. An inner wall surface of the insulation top portion 112 facing the groove is perpendicular to an inner wall surface of the insulation main body portion 110 facing the groove. The inner side wall of the pole shoe 12 is in contact with all of the inner walls of the insulation main body portion 110, the insulation top portion 112 and the insulation bottom portion 111 facing the groove. In this way, the shape formed by the pole shoe 12 and the open slot 21 in cooperation with each other is the same as the shape of the existing semi-closed slot, making subsequent electromagnetic calculations the same as conventional calculations, thereby facilitating design and selection by the engineer. The stiffness of the slot wedge 1 can be further enhanced by the insulation top portion 112, so that the slot wedge 1 can bear a larger force. The insulation main body 11 at the insulation top portion 112 cooperates with the insulation main body 11 on the side of the pole shoe 12 close to the bottom of the open slot 21 to enclose the pole shoe 12, which protects the pole shoe 12 from being deformed by a magnetic force applied by a permanent magnet. With such arrangement, the insulation main body 11 will protrude from the end face of the core 2, which may affect the size of the mechanical gap. According to other examples of the present embodiment, the insulation main body 11 may not be provided with the insulation top portion 112, and a surface of the another side of the pole shoe 12 away from the bottom of the open slot 21 is flush with an upper end face of the insulation main body portion 110.

In an example, the insulation main body 11 further includes an insulation end portion, which blocks the pole shoe 12 along a length direction of the pole shoe 12. The insulation end portion protects both front and rear ends of the pole shoe 12, so that the pole shoe 12 is prevented from being damaged when the slot wedge 1 is assembled in the open slot 21.

In an example, the insulation bottom portion 111 extends into the open slot 21 below the positioning portion 212, and an outer side surface of the insulation bottom portion 111 is in contact with the slot wall of the open slot 21. With the insulation bottom portion 111, the overall stiffness of the slot wedge 1 is further enhanced, and the insulation main body 11 can bear a large expansion force applied by the winding.

In an example, the positioning portion 212 is a V-shaped groove, and an outer side surface of each of the pole shoes 12 is inclined outwards in a direction away from the bottom of the open slot 21. The outer side faces of the pole shoes 12 are in contact with the positioning portion 212. The V-shaped groove has two inclined limiting faces that respectively contact the two outer side faces of the pole shoes 12 to position the pole shoes 12, thereby preventing the pole shoes 12 from moving towards the bottom of the open slot 21. Alternatively, the positioning portion 212 may be a rectangular groove, which has a width larger than a width of the open slot 21. The outer side faces of the pole shoes 12 are not inclined, and are in contact with the slot walls of the rectangular groove. The rectangular groove and the open slot 21 form a step, and the rectangular groove can also position the pole shoes 12.

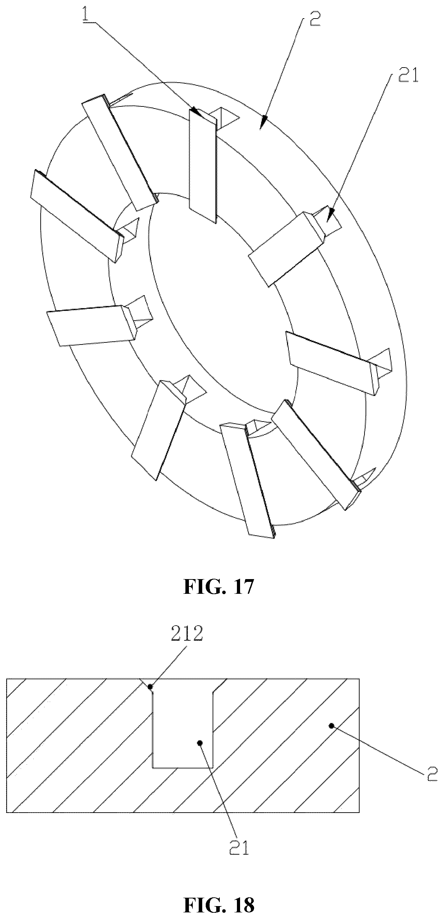

A motor is further provided according to the present embodiment, as shown in FIGS. 17 to 19. The motor includes the core 2. Multiple open slots 21 are evenly distributed on the core 2, and are in one-to-one correspondence with multiple slot wedges 1, where each of the multiple slot wedges 1 is the slot wedge 1 described hereinabove. Each of the multiple open slots 21 is the open slot 21 structure described hereinabove that has the positioning portion 212. The motor in the present embodiment may be a disk motor or a radial flux motor. Although a lap winding can be placed in the radial flux motor by welding, a continuous wave winding still needs open slots for placement. That is, the slot wedge 1 according to the present embodiment is also applicable to the radial flux motor.

In an example, front and rear ends of the insulation main body 11 extend out of the open slot 21, and in this way, the insulation main body 11 can limit an end winding outside the core 2.

The disk motor is taken as an example for detailed description. The core 2 is processed by rolling or stamping first, and each of the multiple open slots 21 is manufactured on the core 2. The positioning portion 212 is manufactured at the opening of the open slot 21, so as to facilitate the subsequent assembly of the slot wedge 1. The positioning portion 212 is connected with the pole shoe 12 and positions the pole shoe 12.

The pole shoe 12 of the slot wedge 1 is prepared. In an example, the pole shoe 12 part is made of a soft magnetic material, which includes but is not limited to silicon steel sheets, SMC (soft magnetic composite material) or the like. The soft magnetic material is formed into the pole shoe 12 by riveting or self-bonding of the silicon steel sheets, or sintering of the soft magnetic material. The pole shoe 12 and the open slot 21 cooperate with each other to form a shape identical to the shape of the conventional semi-closed slot 21, thereby facilitating the subsequent electromagnetic calculations, and making it easier for the engineer to design and calculate.

The pole shoe 12 part is formed and is placed into a mold for compression molding. A composite material of the insulation main body 11 is added to enclose the pole shoe 12. The composite material is a material that has relatively good stiffness and is insulative, which includes but is not limited to glass fiber or the like. Then the slot wedge 1 is manufactured by compression molding.

In the present embodiment, the pole shoe 12 part and the insulation main body 11 part are bonded into a whole, and the materials thereof are not blended, so as to prevent the soft magnetic material of the pole shoe 12 and the core 2 from being connected to each other to cause the eddy current loss. Finally, the winding is placed in the open slot 21, and then the pole shoe 12 is connected to the positioning portion 212 of the open slot 21 by the magnetically conductive adhesive to finish assembly. The pole shoe 12 contacts the core 2 to replace a pole shoe 12 for the semi-closed slot 21 in forming a magnetic circuit. The insulation main body 11 is the main body of the slot wedge 1, and can bear the expansion force applied by the winding.

The self-piercing riveting technology, the core rolling technology and the compression molding technology for the composite material in the present technical solution are all mature technologies, and are easy to perform. With the present embodiment, it is possible to solve problems of difficulty in winding placement, increased harmonics of the air gap and increased eddy current in magnetic slot wedge with relatively low cost and technology requirements.

### Second embodiment of second aspect

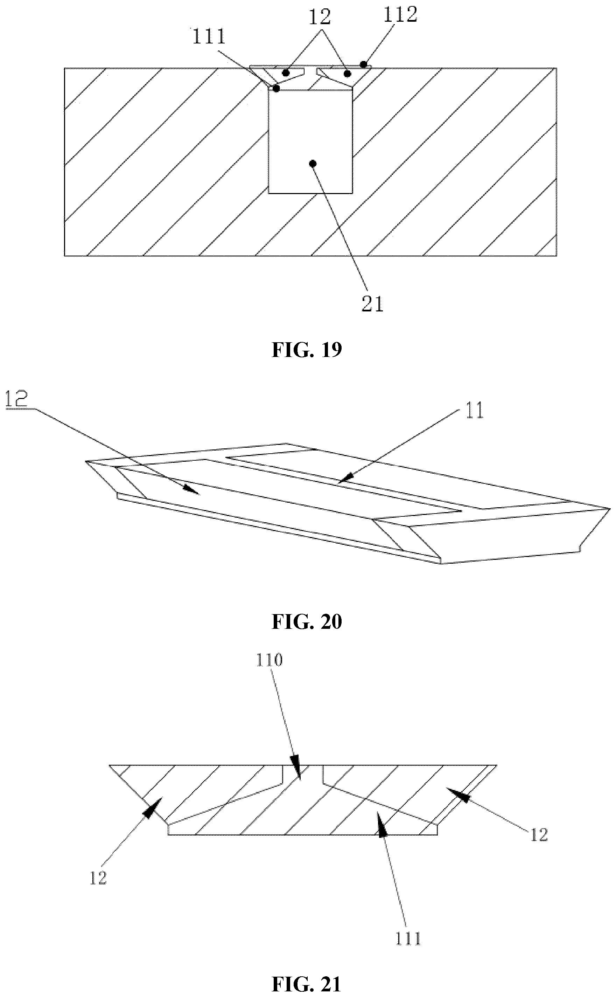

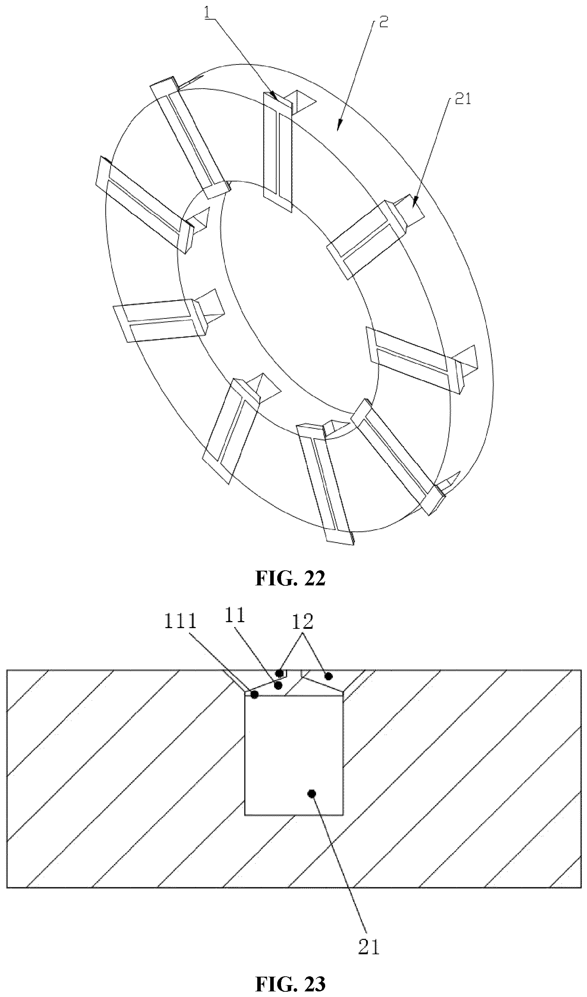

As shown in FIGS. 20 to 23, the present embodiment differs from the first embodiment of the second aspect in that, the another side of the pole shoe 12 away from the bottom of the open slot 21 and the insulation main body 11 are on a same surface. As such, there is no insulation main body 11 on the surface of the another side of the pole shoe 12 away from the bottom of the open slot 21, so as to prevent that there is the insulation main body 11, on a surface of the slot wedge 1, that protrudes from the end face of the core 2, which may affects the size of the mechanical air gap. The shape formed by the pole shoe 12 and the open slot 21 in cooperation with each other is the same as the shape of the conventional semi-closed slot 21, making subsequent electromagnetic calculations the same as the conventional calculations, thereby facilitating design and selection by the engineer. The third groove wall 113 according to the first embodiment of the second aspect is not provided in the present embodiment. Other structures of the present embodiment are the same as those of the first embodiment of the second aspect.

It should be noted that, the above embodiments are only preferred embodiments of the present application, and are not intended to limit the present application. Although the present application is described in detail with reference to the above embodiments, those skill in the art can still make modifications to the technical solutions described in the above embodiments or make equivalent substitutions to some of the technical features. All modifications, equivalent substitutions and improvements without departing from the spirit and principle of the present application are deemed to fall into the scope of protection of the present application.

## Claims

1. A slot wedge, comprising:
an insulation main body; and
at least one pole shoe, provided on one side or each of two opposite sides of the insulation main body, wherein
an outer side wall of the pole shoe is fixedly connected to a side slot wall of an open slot of a core on a near side of the open slot; and
an inner side wall of the pole shoe is fixedly connected to the insulation main body, so that magnetic communication between the inner side wall of the pole shoe and the open slot is blocked.

2. The slot wedge according to claim 1, wherein
the one side or each of the two opposite sides of the insulation main body is provided with a groove, and the pole shoe is mounted in the groove; and
a side wall of the pole shoe that is connected to the side slot wall of the open slot is the outer side wall of the pole shoe, and another side wall of the pole shoe that is connected to a side wall of the groove is the inner side wall of the pole shoe.

3. The slot wedge according to claim 2, wherein
the insulation main body comprises an insulation main body portion and an insulation bottom portion that are connected to each other; and
the insulation main body portion is located between the pole shoe and another side slot wall of the open slot on a far side of the open slot, and the insulation bottom portion is located on a side of the pole shoe close to the bottom of the open slot.

4. The slot wedge according to claim 3, wherein an inner wall of the insulation bottom portion forming a groove wall of the groove is a first groove wall, and the first groove wall is inclined away from the bottom of the open slot in a direction from the insulation bottom portion to the insulation main body portion.

5. The slot wedge according to any one of claims 1 to 3, wherein the insulation main body further comprises an insulation top portion that is connected to the insulation main body portion, and the insulation top portion is located on another side of the pole shoe away from the bottom of the open slot.

6. The slot wedge according to any one of claims 1 to 5, wherein
a first protrusion extending outwards is provided on an outer side of the pole shoe, and the side slot wall of the open slot is provided with an engagement groove; and
the first protrusion is in engagement with the engagement groove, and a shape of a cross section of the first protrusion is the same as a shape of a cross section of the engagement groove.

7. The slot wedge according to claim 6, wherein the insulation main body further comprises an insulation end portion that blocks two ends of the pole shoe along a length direction of the pole shoe.

8. The slot wedge according to claim 7, wherein the insulation end portion is provided with a second protrusion in correspondence with the first protrusion, and a shape of a cross section of the second protrusion is the same as the shape of the cross section of the first protrusion.

9. The slot wedge according to any one of claims 1 to 8, wherein the pole shoe is provided on the one side of the insulation main body, and the other side of the insulation main body away from the pole shoe is fixedly connected to the another side slot wall of the open slot.

10. The slot wedge according to claim 9, wherein the other side of the insulation main body away from the pole shoe is provided with a third protrusion, and the third protrusion is engaged and fixed to the another side slot wall of the open slot.

11. The slot wedge according to any one of claims 1 to 8, wherein the pole shoe is provided on each of the two opposite sides of the insulation main body, and the pole shoe on one of the two opposite sides of the insulation main body is isolated from the pole shoe on the other one of the two opposite sides of the insulation main body by the insulation main body.

12. A slot wedge, comprising:
an insulation main body; and
at least one pole shoe, provided on one side or two opposite sides of the insulation main body, wherein
a positioning portion is provided at an opening of an open slot of a core, and an outer side wall of the pole shoe is fixed to the positioning portion by magnetically conductive adhesive, wherein magnetic communication between an inner side wall of the pole shoe and the open slot is blocked by the insulation main body.

13. The slot wedge according to claim 12, wherein
an outer side wall of the insulation main body is provided with a groove for mounting of the pole shoe, and the inner side wall of the pole shoe is in contact with a groove wall of the groove; and
the insulation main body comprises an insulation main body portion and an insulation bottom portion that are connected to each other, wherein
the insulation main body portion is located between the pole shoe and a side slot wall of the open slot away from the positioning portion, and the insulation bottom portion is located on a side of the pole shoe close to the bottom of the open slot.

14. The slot wedge according to claim 13, wherein an end of the insulation bottom portion away from the insulation main body portion is in contact with a side slot wall of the open slot to block magnetic communication between the inner side wall of the pole shoe and the open slot.

15. The slot wedge according to claim 13, wherein the outer side wall of the pole shoe and the outer side wall of the insulation main body are on a same surface.

16. The slot wedge according to claim 13, wherein an inner side wall of the insulation bottom portion forming the groove wall of the groove is a first groove wall, and the first groove wall is inclined away from the bottom of the open slot in a direction from the insulation bottom portion to the insulation main body portion.

17. The slot wedge according to any one of claims 12 to 16, wherein a surface of the pole shoe on a side of the pole shoe away from the bottom of the open slot and an end face of the core that is provided with the open slot are on a same surface.

18. The slot wedge according to any one of claims 13 to 16, wherein the insulation main body further comprises an insulation top portion that is connected to the insulation main body portion, and the insulation top portion is located on a side of the pole shoe away from the bottom of the open slot.

19. The slot wedge according to claim 18, wherein an inner wall of the insulation top portion facing the groove is perpendicular to an inner wall of the insulation main body portion facing the groove.

20. The slot wedge according to any one of claims 13 to 16, wherein the insulation main body further comprises an insulation end portion that blocks two ends of the pole shoe along a length direction of the pole shoe.

21. The slot wedge according to any one of claims 12 to 20, wherein the positioning portion is a V-shaped groove, and a shape of the outer side wall of the pole shoe matches a shape of a groove wall of the positioning portion.

22. The slot wedge according to any one of claims 12 to 21, wherein the pole shoe is provided on the one side of the insulation main body, and the other side of the insulation main body away from the pole shoe is fixedly connected to the side slot wall of the open slot.

23. The slot wedge according to any one of claims 12 to 21, wherein the pole shoe is provided on each of the two opposite sides of the insulation main body, and the pole shoe on one of the two opposite sides of the insulation main body is isolated from the pole shoe on the other one of the two opposite sides of the insulation main body by the insulation main body.

24. A motor, comprising a core, wherein a plurality of open slots are provided on the core, and are in one-to-one correspondence with a plurality of slot wedges, wherein each of the plurality of slot wedges is the slot wedge according to any one of claims 1 to 23.

25. The motor according to claim 24, wherein a front end and a rear end of the insulation main body extend out of a corresponding one of the plurality of open slots.
